# EUROPÄISCHE PATENTANMELDUNG

(11) **EP 2 562 042 A1**
(43) Veröffentlichungstag der Anmeldung: **27.02.2013**
(21) Anmeldenummer: 12174950.1
(22) Anmeldetag: 04.07.2012
(51) Int. Cl.: B60Q 1/115

(54) **Verfahren zur Bestimmung einer Leuchtweite zumindest eines Scheinwerfers und Verfahren zur Kalibrierung einer Lichtaussendung zumindest eines Scheinwerfers eines Fahrzeugs**

(30) Priorität: 23.08.2011 DE 102011081392
(71) Anmelder: ROBERT BOSCH GMBH, 70442 Stuttgart (DE)
(72) Erfinder: Foltin, Johannes, 71254 Ditzingen (DE)

(57) **Zusammenfassung**

Es wird ein Verfahren (400) zur Bestimmung einer Leuchtweite zumindest eines Scheinwerfers eines Fahrzeugs vorgeschlagen. Dabei umfasst das Verfahren (400) einen Schritt des Erkennens (410) zumindest eines Fahrbahnmarkierungsmerkmals, das von dem zumindest einen Scheinwerfer angestrahlt wird. Das Verfahren (400) weist auch einen Schritt des Ermittelns (420) eines Abstandes zwischen dem Fahrzeug und dem zumindest einen angestrahlten Fahrbahnmarkierungsmerkmal auf. Das Verfahren (400) weist ferner einen Schritt des Bestimmens (430) der Leuchtweite des zumindest einen Scheinwerfers unter Verwendung des ermittelten Abstandes auf.

## Beschreibung

### Stand der Technik

Die vorliegende Erfindung bezieht sich auf ein Verfahren zur Bestimmung einer Leuchtweite zumindest eines Scheinwerfers eines Fahrzeugs, auf ein Verfahren zur Kalibrierung einer Lichtaussendung zumindest eines Scheinwerfers eines Fahrzeugs sowie auf eine Vorrichtung, die ausgebildet ist, um die Schritte eines solchen Verfahrens durchzuführen.

Die Lichtstärke von Fahrzeugscheinwerfern wird immer weiter erhöht. Wenn die Scheinwerfer nicht richtig eingestellt sind, kann es zu einer Blendung anderer Verkehrsteilnehmer kommen. Bei einigen Scheinwerfersystemen, wie z. B. Xenon-Lichtquellen, ist eine automatische Leuchtweitenregulierung vorgeschrieben. Es gibt Bestrebungen, "Xenon Light" zur Marktreife zu bringen, das eine geringere Lichtstärke als klassisches Xenon-Licht hat. Das "Xenon Light" bewegt sich an der rechtlich zulässigen Grenze, bei der keine automatische Leuchtweitenregulierung mehr benötigt wird, ist jedoch heller als klassische Halogen-Glühlampen. Auch mit Halogen-Scheinwerfern kann es durch eine falsche Einstellung häufig zu einer Blendung kommen. Die Einstellung der Scheinwerfer kann beim Scheinwerfer-Einbau mit Spezialgeräten erfolgen. Wenn ein Leuchtmittel getauscht wird, kommt es beispielsweise vor, dass dieses nach dem Austausch aufgrund von Toleranzen nicht genau an der gewünschten Stelle sitzt, was eine Blendung zur Folge haben kann. Es gibt Schätzungen, dass falsch eingestellte Scheinwerfer bei Fahrzeugen weit verbreitet sind. Ein Regulierungskonzept, die dynamische Leuchtweitenregulierung, nutzt Achssensoren, um den Beladungszustand des Fahrzeugs festzustellen und die veränderte Leuchtweite auszugleichen.

Das Dokument DE 102 54 806 B4 zeigt ein Verfahren zur Informationsverarbeitung von wenigstens zwei Informationsquellen in einem Kraftfahrzeug.

### Offenbarung der Erfindung

Vor diesem Hintergrund werden mit der vorliegenden Erfindung ein verbessertes Verfahren zur Bestimmung einer Leuchtweite zumindest eines Scheinwerfers eines Fahrzeugs, ein verbessertes Verfahren zur Kalibrierung einer Lichtaussendung zumindest eines Scheinwerfers eines Fahrzeugs, eine verbesserte Vorrichtung und ein verbessertes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass eine Leuchtweite eines Fahrzeugscheinwerfers anhand von Fahrbahnmarkierungsmerkmalen bestimmt werden kann. Dabei werden die Fahrbahnmarkierungsmerkmale von dem Fahrzeugscheinwerfer angestrahlt und infolgedessen erkannt. Ist der Abstand zu den angestrahlten Fahrbahnmarkierungsmerkmalen bekannt, so kann basierend darauf die Leuchtweite bestimmt werden. Die Kenntnis der Leuchtweite kann zur Kalibrierung des Fahrzeugscheinwerfers verwendet werden.

Ein Vorteil der vorliegenden Erfindung liegt darin, dass die Leuchtweite des Scheinwerfers des Fahrzeugs ohne externe Messgeräte in einer Werkstatt, einem Prüfstand oder dergleichen bestimmt werden kann, was eine Vereinfachung und Kostenersparnis bietet. Zudem kann die Leuchtweite kontinuierlich während der Fahrt bestimmt werden, wobei die vorliegende Erfindung ohne eine Fahrzeugbeladungssensorik oder dergleichen auskommt. Zusätzlich zu Vereinfachung und Kostenersparnis verbessert die vorliegende Erfindung auch die Verkehrssicherheit, da aus der bestimmten Leuchtweite Einstellungen an dem Scheinwerfer vorgenommen werden können, um eine Blendung anderer Verkehrsteilnehmer zu vermeiden.

Die vorliegende Erfindung schafft ein Verfahren zur Bestimmung einer Leuchtweite zumindest eines Scheinwerfers eines Fahrzeugs, wobei das Verfahren folgende Schritte aufweist:
Erkennen zumindest eines Fahrbahnmarkierungsmerkmals, das von dem zumindest einen Scheinwerfer angestrahlt wird;
Ermitteln eines Abstandes zwischen dem Fahrzeug und dem zumindest einen angestrahlten Fahrbahnmarkierungsmerkmal; und
Bestimmen der Leuchtweite des zumindest einen Scheinwerfers unter Verwendung des ermittelten Abstandes.

Bei dem Fahrzeug kann es sich um ein Kraftfahrzeug, beispielsweise einen Personenkraftwagen oder Lastkraftwagen, handeln. Bei dem zumindest einen Scheinwerfer kann es sich beispielsweise um einen Frontscheinwerfer zur Fahrbahnausleuchtung handeln. Das zumindest eine Fahrbahnmarkierungsmerkmal kann einen Licht reflektierenden Bereich und zusätzlich oder alternativ eine sich von der Fahrbahn unterscheidende Farbe aufweisen. Das Erkennen des zumindest einen Fahrbahnmarkierungsmerkmals, und somit auch die Ermittlung des Abstandes zwischen demselben und dem Fahrzeug, kann basierend auf dem Licht reflektierenden Bereich und/oder der sich von der Fahrbahn unterscheidenden Farbe erfolgen. Das Ermitteln kann basierend auf einem Bild des Fahrbahnmarkierungsmerkmals erfolgen. Das Bild kann von einer Bilderfassungseinrichtung des Fahrzeugs erfasst worden sein. Das Bild kann mittels einer Bildauswertung ausgewertet werden, um das Fahrbahnmarkierungsmerkmals zu erkennen.

Im Schritt des Erkennens kann ein Leitpfosten und zusätzlich oder alternativ eine Begrenzungslinie als das zumindest eine Fahrbahnmarkierungsmerkmal erkannt werden. Somit kann das zumindest eine Fahrbahnmarkierungsmerkmal einen Leitpfosten und zusätzlich oder alternativ eine Begrenzungslinie oder einen Abschnitt derselben umfassen. Bei der Begrenzungslinie kann es sich beispielsweise um eine im Wesentlichen regelmäßig unterbrochene Mittellinie der Fahrbahn handeln. Bei dem Leitpfosten kann es sich um einen einzelnen stehenden Leitpfosten oder einen in eine Leitplanke integrierten Leitpfosten handeln. Der Leitpfosten kann einen definierten Abstand zu einem vorhergehenden Leitpfosten und/oder zu einem nachfolgenden Leitpfosten aufweisen. Diese Ausführungsform bietet den Vorteil, dass zur Bestimmung der Leuchtweite Fahrbahnmarkierungsmerkmale genutzt werden können, die normalerweise an einer Fahrbahn vorhanden sind. Ferner kann eine Anordnung der Fahrbahnmarkierungsmerkmale bezüglich einander definiert bzw. genormt oder einer erkennbaren Regelmäßigkeit unterliegen. Ist beispielweise eine Entfernung zwischen aufeinanderfolgenden Fahrbahnmarkierungsmerkmalen bekannt, so kann diese bekannte Entfernung zur Ermitteln des Abstandes zwischen dem Fahrzeug und dem zumindest einen angestrahlten Fahrbahnmarkierungsmerkmal genutzt werden. Ein Wert der Entfernung zwischen aufeinanderfolgenden Fahrbahnmarkierungsmerkmalen kann vorbestimmt sein und beispielsweise aus einem Speicher ausgelesen werden oder während der Fahrt bestimmt werden. Somit kann die Leuchtweite auf unterschiedlichen Fahrbahnen zuverlässig bestimmt werden.

Insbesondere kann im Schritt des Erkennens eine Reflexion von durch den zumindest einen Scheinwerfer ausgesendetem Licht an einem Reflektorelement des zumindest einen Fahrbahnmarkierungsmerkmals erkannt werden. Dabei kann die Reflexion von zumindest einem Teilbereich einer Oberfläche des zumindest einen Fahrbahnmarkierungsmerkmals ausgehen. Das Reflektorelement kann hierbei ein Reflektor eines Leitpfostens oder die eingefärbte Fläche einer Begrenzungslinie sein. Diese Ausführungsform bietet den Vorteil, dass das zumindest eine Fahrbahnmarkierungsmerkmal auf diese Weise sehr zuverlässig, exakt und sicher erfasst werden kann. Auch kann das Fahrbahnmarkierungsmerkmal selbst durch das Reflektorelement gebildet sein.

Dabei kann das Verfahren einen Schritt des Durchführens einer Schwellwertentscheidung aufweisen, um zu prüfen, ob ein Helligkeitswert der Reflexion über oder unter einem vorgebbaren Helligkeitsschwellenwert liegt. Hierbei kann im Schritt des Ermittelns der Abstand abhängig von der Schwellwertentscheidung ermittelt werden. Der Helligkeitsschwellenwert kann eine Grenze zwischen einem durch den zumindest einen Scheinwerfer erzeugten Lichtkegel und einer Beleuchtung durch andere Lichtquellen, wie beispielsweise andere Fahrzeuge, Straßenlaternen, Mondschein und dergleichen, repräsentieren. Wenn der Helligkeitswert eines Fahrbahnmarkierungsmerkmals unter dem Helligkeitsschwellenwert liegt, kann im Schritt des Ermittelns kein Abstand zwischen dem Fahrzeug und diesem Fahrbahnmarkierungsmerkmal ermittelt werden. Wenn der Helligkeitswert eines Fahrbahnmarkierungsmerkmals dagegen über dem Helligkeitsschwellenwert liegt, kann im Schritt des Ermittelns der Abstand zwischen dem Fahrzeug und diesem Fahrbahnmarkierungsmerkmal ermittelt werden. Diese Ausführungsform bietet den Vorteil, dass die Bestimmung der Leuchtweite noch genauer erfolgen kann, weil bei der Bestimmung lediglich Fahrbahnmarkierungsmerkmale berücksichtigt werden, die tatsächlich von dem mindestens einen Scheinwerfer des Fahrzeugs angestrahlt werden. Es kann somit vermieden werden, dass Fahrbahnmarkierungsmerkmale, die durch einen Scheinwerfer eines anderen Fahrzeugs angestrahlt werden, erkannt und zur Bestimmung der Leuchtweite verwendet werden.

Auch kann im Schritt des Erkennens das zumindest eine Fahrbahnmarkierungsmerkmal, das von dem zumindest einen Scheinwerfer angestrahlt wird, unter Verwendung eines mittels einer Fahrzeugkamera aufgenommenen Bildes ermittelt werden. Bei der Fahrzeugkamera kann es sich um eine in Vorwärtsfahrtrichtung des Fahrzeugs gerichtete Kamera, Bildverarbeitungseinrichtung und/oder dergleichen handeln. Die Fahrzeugkamera kann beispielsweise in einem Innenraum des Fahrzeugs verbaut sein. Diese Ausführungsform bietet den Vorteil, dass mittels einer Fahrzeugkamera das zumindest eine Fahrbahnmarkierungsmerkmal auf einfache und genaue Weise erkannt werden kann.

Im Schritt des Ermittelns kann der Abstand basierend auf Informationen einer Abstandssensorik, Objektverfolgung, Bildauswertung und/oder Fahrtdaten ermittelt werden. Die Entfernung bzw. der Abstand bis zu einem Fahrbahnmarkierungsmerkmal, beispielsweise einem Reflektor, kann über eine Messung einer abgefahrenen Strecke bis zum Passieren des Fahrbahnmarkierungsmerkmals gemessen bzw. ermittelt werden. Bei einer Ermittlung mittels Fahrtdaten können Positionsinformationen bzw. Positionsdifferenzen genutzt werden, die beispielsweise von einem Navigationsgerät oder dergleichen stammen können. Es ist auch möglich, direkt über abstandsmessende Sensoren den Abstand zu dem Fahrbahnmarkierungsmerkmal zu ermitteln. Dies kann beispielsweise mittels einer Stereo-Kamera, mittels Radar, mittels Lidar, mittels Time of Flight, etc. erfolgen. Die Position in einem Bild und die Eigenbewegung des Fahrzeugs können mit genutzt werden, um abzuschätzen, ob das Fahrbahnmarkierungsmerkmal sichtbar sein müsste oder nicht. Diese Ausführungsform bietet den Vorteil, dass der Abstand, und somit auch die Leuchtweite, sehr exakt ermittelt werden kann.

Wenn zwei oder mehr Arten der Abstandsermittlung kombiniert verwendet werden, kann dies die Genauigkeit der Abstandsermittlung noch weiter erhöhen. Auch kann je nach aktuellen Umgebungsbedingungen des Fahrzeugs eine geeignete Art der Abstandsermittlung gewählt werden.

Es kann im Schritt des Erkennens zumindest ein weiteres Fahrbahnmarkierungsmerkmal erkannt werden, das von dem zumindest einen Scheinwerfer angestrahlt wird. Zudem kann im Schritt des Ermittelns zumindest ein weiterer Abstand zwischen dem Fahrzeug und dem zumindest einen weiteren angestrahlten Fahrbahnmarkierungsmerkmal ermittelt werden. Ferner kann im Schritt des Bestimmens die Leuchtweite des zumindest einen Scheinwerfers unter Verwendung des größeren der ermittelten Abstände bestimmt werden. Wenn der zumindest eine weitere ermittelte Abstand zwischen dem Fahrzeug und dem zumindest einen weiteren angestrahlten Fahrbahnmarkierungsmerkmal größer ist als der ermittelte Abstand zwischen dem Fahrzeug und dem angestrahlten Fahrbahnmarkierungsmerkmal, wird die Leuchtweite unter Verwendung des zumindest einen weiteren ermittelten Abstandes bestimmt. Wenn der ermittelte Abstand zwischen dem Fahrzeug und dem angestrahlten Fahrbahnmarkierungsmerkmal größer ist als der zumindest eine weitere ermittelte Abstand zwischen dem Fahrzeug und dem zumindest einen weiteren angestrahlten Fahrbahnmarkierungsmerkmal, wird die Leuchtweite unter Verwendung des ermittelten Abstandes bestimmt. Somit wird die Leuchtweite unter Verwendung des Abstandes zu dem am weitesten von dem Fahrzeug entfernten, erkannten Fahrbahnmarkierungsmerkmal bestimmt. Diese Ausführungsform bietet den Vorteil, dass die Leuchtweite auf der Grundlage des größten Abstandes zu einem erkannten Fahrbahnmarkierungsmerkmal korrekt und zuverlässig bestimmt werden kann.

Die vorliegende Erfindung schafft ferner ein Verfahren zur Kalibrierung einer Lichtaussendung zumindest eines Scheinwerfers eines Fahrzeugs, wobei das Verfahren folgende Schritte aufweist:
Bestimmen einer Leuchtweite des zumindest einen Scheinwerfers nach dem oben genannten Verfahren;
Kombinieren der bestimmten Leuchtweite und einer vorgegebenen Leuchtweite, um einen Kalibrierungswert zu erzeugen; und
Ausgeben eines den Kalibrierungswert repräsentierenden Kalibrierungssignals, um die Kalibrierung der Lichtaussendung des zumindest einen Scheinwerfers zu bewirken.

Die Lichtaussendung des zumindest einen Scheinwerfers kann in Stufen oder stufenlos veränderbar sein. Die Lichtaussendung des zumindest einen Scheinwerfers kann durch eine Abstrahlcharakteristik des zumindest einen Scheinwerfers gekennzeichnet sein. Die Abstrahlcharakteristik kann eine Leuchtweite, einen Leuchtwinkel, eine Helligkeit und/oder dergleichen des zumindest einen Scheinwerfers aufweisen. Insbesondere kann bei der Kalibrierung der Lichtaussendung des zumindest einen Scheinwerfers über eine Veränderung der Leuchtweite bzw. des Leuchtwinkels des zumindest einen Scheinwerfers erfolgen. Die vorgegebene Leuchtweite kann beispielsweise auf gesetzlichen Vorschriften basieren. Im Schritt des Kombinierens kann beispielsweise ein Differenzbetrag zwischen der bestimmten Leuchtweite und der vorgegebenen Leuchtweite ermittelt werden. Der erzeugte Kalibrierungswert kann beispielsweise diesen Differenzbetrag repräsentieren. Bei dem Kalibrierungswert kann es sich somit um einen Korrekturwert handeln, um den die Lichtaussendung korrigiert werden kann, damit die Leuchtweite der vorgegebenen Leuchtweite entspricht. Der Kalibrierungswert ist somit geeignet, um bei Verwendung bei der Kalibrierung der Lichtaussendung bzw. der Ansteuerung des Scheinwerfers zu bewirken, dass die Leuchtweite an die vorgegebene Leuchtweite angepasst wird. Dabei kann im Schritt des Ausgebens das Kalibrierungssignal direkt an den zumindest einen Scheinwerfer oder eine Einrichtung zur Ansteuerung des Scheinwerfers ausgegeben werden. Hierbei kann das Kalibrierungssignal als Ansteuersignal für den zumindest einen Scheinwerfer fungieren. Alternativ oder zusätzlich kann im Schritt des Ausgebens das Kalibrierungssignal in Gestalt eines Warnsignals, beispielsweise ein optisches und/oder akustisches Warnsignal, an einen Fahrer des Fahrzeugs ausgegeben werden. Das Verfahren zur ScheinwerferKalibrierung kann bei der Produktion des Fahrzeugs durchgeführt werden, um die Scheinwerfer einzustellen.

Gemäß einer Ausführungsform kann das Verfahren zusätzlich oder alternativ zu dem Schritt des Bestimmens einer Leuchtweite einen Schritt des Bestimmens eines Helligkeitsverlaufs des zumindest einen Fahrbahnmarkierungsmerkmals umfassen, um einen geschätzten Nickwinkel des Fahrzeugs zu bestimmen. Im Schritt des Kombinierens kann der geschätzte Nickwinkel mit einem gemessenen Nickwinkel oder einer Nickrate kombiniert werden, um den Kalibrierungswert zu erzeugen. Der gemessene Nickwinkel kann auf Bewegungsdaten des Fahrzeugs, beispielsweise der Nickrate, basieren. Die Bewegungsdaten können eine Nickbewegung des Fahrzeugs darstellen. Die Bewegungsdaten können von einem Beschleunigungssensor oder Drehratensensor bereitgestellte Daten umfassen oder auf von einem Beschleunigungssensor oder Drehratensensor erfassten Daten basieren. Die Nickrate kann auch aus dem Kamerabild berechnet werden. Bei Bodenwellen kann durch Integration der Nicktrate ein Nickwinkel-Offset berechnet werden, bei dem die Reflektoren gerade oder gerade nicht mehr gesehen werden können. Bewegungsdaten können somit auch aus Kamera-Bildern geschätzt werden. Beispielsweise können die Bewegungsdaten einen gemessenen Nickwinkel und/oder eine gemessene oder berechnete Nickrate des Fahrzeugs umfassen. Auch kann ein Wert des gemessenen Nickwinkels vorbestimmt sein und dem Verfahren zur Verwendung über eine Schnittstelle bereitgestellt werden. Ein vorbestimmter Wert bietet sich im Rahmen der Durchführung des Verfahrens in einer bekannten Testumgebung an. Das zumindest eine Fahrbahnmarkierungsmerkmal kann über eine Mehrzahl von Bildern verfolgt werden. Es kann ein Helligkeitsverlauf des zumindest einen Fahrbahnmarkierungsmerkmal über die Mehrzahl von Bildern ermittelt werden. Insbesondere kann dasjenige Bild ermittelt werden, in dem der das zumindest eine Fahrbahnmarkierungsmerkmal eine maximale Helligkeit aufweist, die durch ein sogenanntes Aufblitzen des durch den Scheinwerfer beleuchteten Fahrbahnmarkierungsmerkmals hervorgerufen wird. Dem Bild, das das zumindest eine Fahrbahnmarkierungsmerkmal mit maximaler Helligkeit darstellt, kann ein geschätzter Nickwinkel zugeordnet werden. Um den geschätzten Nickwinkel zu bestimmen kann je nach Situation auf unterschiedliche bekannte Werte oder Parameter zurückgegriffen werden. Mögliche Daten zur Bestimmung des geschätzten Nickwinkels können ein Abstand zwischen dem Scheinwerfer und dem Fahrbahnmarkierungsmerkmal, einen relativen Höhenunterschied zwischen dem Scheinwerfer und dem Fahrbahnmarkierungsmerkmal, eine Leuchtcharakteristik des Scheinwerfers sowie eine Position des Fahrbahnmarkierungsmerkmal im Bild umfassen. Bei dem Fahrbahnmarkierungsmerkmal kann es sich auch um einen an einer definierten Position angeordneten Reflektor handeln, der in einer Produktionsumgebung des Fahrzeugs angeordnet ist, um den Scheinwerfer nach der Montage im Fahrzeug zu kalibrieren. Der gemessene Nickwinkel kann mit dem geschätzten Nickwinkel verglichen oder kombiniert werden, um den Kalibrierungswert oder einen weiteren Kalibrierungswert zu erzeugen. Der Kalibrierungswert oder der weitere Kalibrierungswert können eingesetzt werden, um den Scheinwerfer so zu kalibrieren, dass der geschätzte Nickwinkel und der gemessene Nickwinkel bei einer weiteren Durchführung des Verfahrens übereinstimmen oder sich aneinander angenähert haben. Die Bestimmung des geschätzten Nickwinkels kann durchgeführt werden, während das Fahrzeug fährt. Alternativ kann das Fahrzeug stehen und zur Durchführung einer Nickbewegung angehoben werden oder alternativ die Reflektorvorrichtung definiert angehoben werden. Gemäß dieser Ausführungsform kann somit die Fahrdynamik, insbesondere der Nickwinkel, bei der Berechnung des Korrekturwerts mit einfließen. Die Anregung des Fahrzeugs durch eine Bodenwelle wird dabei genutzt, um die sich ändernde Sichtweite und zusätzlich oder alternativ die sich ändernde Helligkeit für die Abschätzung des Abstrahlwinkels zu nutzen.

Die vorliegende Erfindung schafft ferner eine Vorrichtung, die ausgebildet ist, um die Schritte eines der oben genannten Verfahren durchzuführen bzw. umzusetzen. Insbesondere kann die Vorrichtung Einrichtungen aufweisen, die ausgebildet sind, um je einen Schritt eines der oben genannten Verfahren auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines der oben genannten Verfahren verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine schematische Darstellung eines Fahrzeugs auf einer Fahrbahn;
- Fig. 2: eine schematische Darstellung eines Fahrzeugs auf einer Fahrbahn mit Fahrbahnmarkierungsmerkmalen;
- Fig. 3: eine schematische Darstellung eines Fahrzeugs mit einer Vorrichtung gemäß einem Ausführungsbeispiel der vorliegenden Erfindung;
- Fig. 4: ein Ablaufdiagramm eines Verfahrens gemäß einem Ausführungsbeispiel der vorliegenden Erfindung; und
- Fig. 5: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

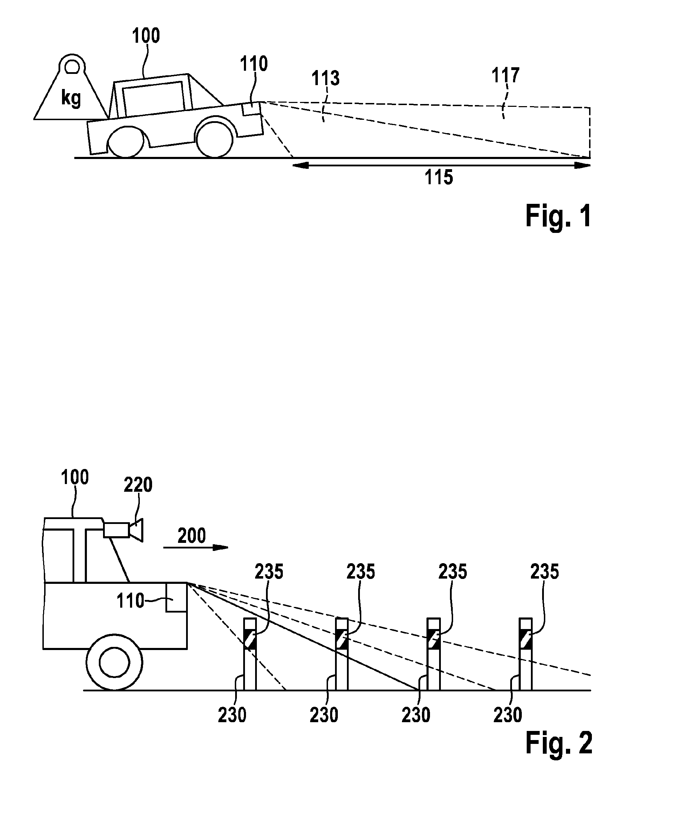

Fig. 1 zeigt eine Seitenansicht eines Fahrzeugs 100 auf einer Fahrbahn. Bei dem Fahrzeug 100 in Fig. 1 handelt es sich um einen Personenkraftwagen. Das Fahrzeug 100 weist einen Scheinwerfer 110 auf, der eine Lichtaussendung bzw. einen Lichtkegel 113 mit einer Leuchtweite 115 aufweist. Bei dem Scheinwerfer 110 handelt es sich um einen Frontscheinwerfer. Das Fahrzeug 100 kann beispielsweise zwei solcher Scheinwerfer 110 aufweisen. Bei der Leuchtweite 115 kann es sich um eine Leuchtweite 115 bei ausgeglichener Lastverteilung in dem Fahrzeug 100 handeln.

In Fig. 1 ist ferner symbolisch ein Gewicht gezeigt, das im Bereich eines im Fahrzeugheck angeordneten Kofferraums auf dem Fahrzeug 100 aufliegt. Das Gewicht bewirkt eine einseitige Lastverteilung in dem Fahrzeug 100. Das Gewicht bewirkt, dass sich das Fahrzeug 100 um eine Querachse bewegt, wobei sich das Fahrzeug bezüglich der Fahrbahn im Bereich des Kofferraums senkt und im Bereich des Scheinwerfers 110 hebt. Diese Bewegung um die Querachse aufgrund des Gewichts bewirkt, dass sich die Leuchtweite bzw. ein Leuchtwinkel des mittels des Scheinwerfers 110 erzeugten Lichtkegels verändert. Aufgrund des Gewichts erzeugt der Scheinwerfer 110 einen veränderten Lichtkegel 117 mit einer veränderten Leuchtweite. Relativ zu einem Zustand ohne das aufgelegte Gewicht bewirkt das zusätzliche Gewicht eine Vergrößerung der Leuchtweite 115.

Fig. 2 zeigt eine schematische Darstellung eines Fahrzeugs 100 auf einer Fahrbahn mit Fahrbahnmarkierungsmerkmalen. Bei dem Fahrzeug 100 kann es sich um das Fahrzeug aus Fig. 1 handeln. Das Fahrzeug 100 weist einen Scheinwerfer 110 auf. Ferner sind in Fig. 2 eine Fahrtrichtung 200, eine Fahrzeugkamera 220 und beispielhaft vier Fahrbahnmarkierungsmerkmale in Gestalt von Leitpfosten 230 mit Reflektorelementen 235 gezeigt. Jeder einzelne Leitpfosten 230 weist dabei ein Reflektorelement 235 auf. Die Fahrzeugkamera 220 ist in dem Fahrzeug 100 angeordnet. Genau gesagt ist die Fahrzeugkamera 220 im Bereich einer Frontscheibe des Fahrzeugs 100 angeordnet. Eine Blickrichtung der Fahrzeugkamera 220 entspricht im Wesentlichen der Fahrtrichtung 200. Die Leitpfosten 230 sind in regelmäßigen Abständen in einer Reihe in der Fahrtrichtung 200 vor dem Fahrzeug 100 an bzw. neben der Fahrbahn angeordnet.

Unter Bezugnahme auf Fig. 2 kann das erfindungsgemäße Prinzip der Erkennung und Nutzung eines Zusammenhangs zwischen einem von dem Scheinwerfer 110 angestrahlten Fahrbahnmarkierungsmerkmal bzw. Leitpfosten 230, insbesondere dessen Reflektorelement 235, und einer Leuchtweite des Scheinwerfers 110 veranschaulicht werden. In Fig. 2 sind dazu vier Linien zwischen dem Scheinwerfer 110 und der Fahrbahn gezeigt, wobei die Linien unterschiedliche Leuchtweiten des Scheinwerfers 110 repräsentieren. Eine einzelne Linie verläuft als eine Gerade von dem Scheinwerfer 110 durch eines der Reflektorelemente 235 der Leitpfosten 230 bis zu der Fahrbahn. Wenn beispielsweise das Reflektorelement 235 des von dem Fahrzeug 100 aus betrachtet ersten bzw. nächstgelegenen Leitpfostens 230 und das Reflektorelement 235 des von dem Fahrzeug 100 aus betrachtet zweiten bzw. am zweitnächsten gelegenen Leitpfostens 230 von dem Scheinwerfer 110 angestrahlt werden, ergibt sich die Leuchtweite des Scheinwerfers 110 entsprechend der Linie durch das Reflektorelement 235 des von dem Fahrzeug 100 aus betrachtet zweiten bzw. am zweitnächsten gelegenen Leitpfostens 230, also des in diesem Fall entferntesten noch von dem Scheinwerfer 110 angestrahlten Leitpfostens 230.

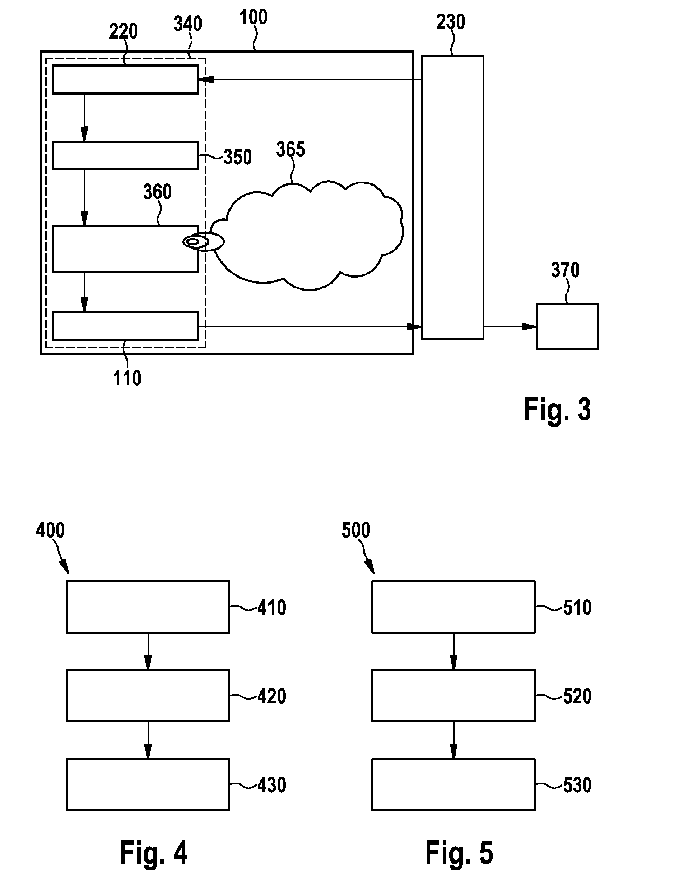

Fig. 3 zeigt eine schematische Darstellung eines Fahrzeugs 100 mit einer Vorrichtung zur Leuchtweitenbestimmung und Scheinwerferkalibrierung gemäß einem Ausführungsbeispiel der vorliegenden Erfindung. Bei dem Fahrzeug 100 kann es sich um das Fahrzeug aus Fig. 1 oder Fig. 2 handeln. Das Fahrzeug 100 weist einen Scheinwerfer 110 und eine Fahrzeugkamera 220 bzw. eine Bildaufnahmeeinheit auf. Der Scheinwerfer 110 sendet Licht zu einem Fahrbahnmarkierungsmerkmal 230 in einem Umfeld des Fahrzeugs 100 aus bzw. strahlt das Fahrbahnmarkierungsmerkmal 230 an. Die Fahrzeugkamera 220 empfängt an dem Fahrbahnmarkierungsmerkmal 230 reflektiertes Licht des Scheinwerfers 110. Das Fahrzeug 100 weist ferner ein aktives Scheinwerfersystem 340 auf, das den Scheinwerfer 110, die Kamera 220, eine Leuchtweitenbestimmungseinrichtung bzw. Leuchtweitenmesseinrichtung 350, eine Scheinwerferansteuereinrichtung 360 und eine Scheinwerferkalibriereinrichtung 365 umfasst. Die Leuchtweitenmesseinrichtung 350, die Scheinwerferansteuereinrichtung 360 und die Scheinwerferkalibriereinrichtung 365 bilden hierbei die Vorrichtung zur Leuchtweitenbestimmung und Scheinwerferkalibrierung gemäß einem Ausführungsbeispiel der vorliegenden Erfindung. Ferner ist in Fig. 3 ein Fahrer 370 bzw. dessen Auge gezeigt. Der Fahrer 370 bzw. dessen Auge empfängt ebenfalls das an dem Fahrbahnmarkierungsmerkmal 230 reflektierte Licht des Scheinwerfers 110.

Die Fahrzeugkamera 220 ist mit der Leuchtweitenmesseinrichtung 350 kommunikativ verbunden. Die Fahrzeugkamera 220 ist ausgebildet, um ein Bild der Umgebung des Fahrzeugs 100 zu erzeugen. In dem Bild der Umgebung des Fahrzeugs 100 ist auch das von dem Scheinwerfer 110 angestrahlte Fahrbahnmarkierungsmerkmal 230 abgebildet. Die Fahrzeugkamera 220 ist ferner ausgebildet, um das aufgenommene Bild der Leuchtweitenmesseinrichtung 350 bereitzustellen.

Die Leuchtweitenmesseinrichtung 350 ist ausgebildet, um das Bild von der Fahrzeugkamera 220 zu empfangen. Die Leuchtweitenmesseinrichtung 350 ist mit der Fahrzeugkamera 220 und der Scheinwerferansteuereinrichtung 360 über eine Übertragungsschnittstelle verbunden. Die Leuchtweitenmesseinrichtung 350 ist zwischen die Fahrzeugkamera 220 und die Scheinwerferansteuereinrichtung 360 geschaltet. Die Leuchtweitenmesseinrichtung 350 ist ausgebildet, um basierend auf dem empfangenen Bild eine Leuchtweite des Scheinwerfers 110 zu bestimmen. Dazu kann die Leuchtweitenmesseinrichtung 350 ferner Sensordaten und/oder Fahrtdaten von anderen Fahrzeugeinrichtungen empfangen, auch wenn es in Fig. 3 nicht dargestellt ist, und zusätzlich zur Bestimmung der Leuchtweite verwenden. Die Leuchtweitenmesseinrichtung 350 ist ausgebildet, um die Schritte eines Verfahrens, wie des Verfahrens aus Fig. 4, auszuführen. Die Leuchtweitenmesseinrichtung 350 erzeugt Messdaten, welche die bestimmte Leuchtweite des Scheinwerfers 110 repräsentieren. Die Leuchtweitenmesseinrichtung 350 ist ausgebildet, um die Messdaten der Scheinwerferansteuereinrichtung 360 bereitzustellen.

Die Scheinwerferansteuereinrichtung 360 ist ausgebildet, um die Messdaten, welche die Leuchtweite des Scheinwerfers 110 repräsentieren, von der Leuchtweitenmesseinrichtung 350 zu empfangen. Die Scheinwerferansteuereinrichtung 360 ist mit der Leuchtweitenmesseinrichtung 350 und dem Scheinwerfer 110 kommunikativ verbunden. Die Scheinwerferansteuereinrichtung 360 ist zwischen die Leuchtweitenmesseinrichtung 350 und den Scheinwerfer 110 geschaltet. Ferner kann die Scheinwerferansteuereinrichtung 360 mit der Scheinwerferkalibriereinrichtung 365 über eine Übertragungsschnittstelle verbunden sein. Alternativ oder zusätzlich kann die Scheinwerferkalibriereinrichtung 365 ein Teil der Scheinwerferansteuereinrichtung 360 sein. Die Scheinwerferansteuereinrichtung 360 ist ausgebildet, um die Messdaten, welche die Leuchtweite des Scheinwerfers 110 repräsentieren, der Scheinwerferkalibriereinrichtung 365 bereitzustellen.

Die Scheinwerferkalibriereinrichtung 365 ist ausgebildet, um die Messdaten, welche die Leuchtweite des Scheinwerfers 110 repräsentieren, von der Scheinwerferansteuereinrichtung 360 zu empfangen. Auch wenn es in Fig. 3 nicht gezeigt ist, kann die Scheinwerferkalibriereinrichtung 365 die Messdaten auch direkt von der Leuchtweitenmesseinrichtung 350 empfangen. Die Scheinwerferkalibriereinrichtung 365 ist ausgebildet, um basierend auf den Messdaten, welche die Leuchtweite des Scheinwerfers 110 repräsentieren, ein Kalibrierungssignal zur Kalibrierung des Scheinwerfers 110 zu erzeugen. Die Scheinwerferkalibriereinrichtung 365 ist dabei ausgebildet, um Schritte eines Verfahrens, wie des Verfahrens aus Fig. 5, auszuführen. Die Scheinwerferkalibriereinrichtung 365 ist ausgebildet, um das Kalibrierungssignal der Scheinwerferansteuereinrichtung 360 bereitzustellen.

Die Scheinwerferansteuereinrichtung 360 ist ausgebildet, um das Kalibrierungssignal von der Scheinwerferkalibriereinrichtung 365 zu empfangen. Die Scheinwerferansteuereinrichtung 360 ist ausgebildet, um basierend auf den Messdaten, welche die Leuchtweite des Scheinwerfers 110 repräsentieren, und/oder basierend auf dem Kalibrierungssignal ein Steuersignal bzw. einen Einstellbefehl zu erzeugen und an den Scheinwerfer 110 auszugeben. Die Scheinwerferansteuereinrichtung 360 ist dabei ausgebildet, um Schritte eines Verfahrens, wie des Verfahrens aus Fig. 5, auszuführen. Das Steuersignal bzw. der Einstellbefehl ist ausgebildet, um eine Steuerung bzw. Kalibrierung der Lichtaussendung des Scheinwerfers 110 zu bewirken. Das Steuersignal bzw. der Einstellbefehl, und damit die Steuerung bzw. Kalibrierung der Lichtaussendung des Scheinwerfers 110, basiert daher auf der mittels der Leuchtweitenmesseinrichtung 350 bestimmten Leuchtweite und alternativ zusätzlich auf dem mittels der Scheinwerferkalibriereinrichtung 365 erzeugten Kalibrierungssignal.

Unter Bezugnahme auf die Figuren 1 bis 3 werden verschiedene Ausführungsbeispiele der vorliegenden Erfindung im Folgenden zusammenfassend erläutert. Die Fahrzeugkamera 220 nimmt ein Bild aus Fahrtrichtung auf und bestimmt die Reflektorelemente 235 der Fahrbahnmarkierungsmerkmale 230 in dem Bild. Wenn ein Reflektorelement 235 eine gewisse Helligkeit überschreitet bzw. überhaupt von der Kamera wahrgenommen werden kann, ist davon auszugehen, dass es von dem zumindest einen Scheinwerfer 110 beleuchtet wird. Anhand der Entfernung bzw. des Abstandes zwischen dem Fahrzeug 100 und dem beleuchteten Reflektorelement kann geprüft werden, ob die Reichweite bzw. Leuchtweite 115 des zumindest einen Scheinwerfers 110 der Soll-Leuchtweite bzw. kalibrierten Leuchtweite entspricht. Je nach Kalibrierung des zumindest einen Scheinwerfers 110 wird eine unterschiedliche Anzahl von Reflektorelementen 235 angestrahlt. Wenn verfolgt wird, wann ein Reflektorelement 235 aufleuchtet, und die Distanz bzw. den Abstand bis zu diesem ermittelt, kann die Sichtweite bzw. Leuchtweite 115 bestimmt werden. Die Kalibrierung des zumindest einen Scheinwerfers 110 hinsichtlich der Leuchtweite 115 kann so online erfolgen. Die Fahrzeugkamera 220 muss bei einem Einbau in das Fahrzeug 100 ebenfalls kalibriert werden. Wenn das Fahrzeug 100 in einem speziellen Scheinwerferkalibrierungsmodus an Reflektorelementen 235 vorbeigefahren wird, können ab Werk die Scheinwerfer 110 hinsichtlich der Leuchtweite 115 eingestellt bzw. kalibriert werden. Somit sind verschiedene Ausführungsbeispiele der vorliegenden Erfindung für eine Bandendeprüfung bzw. Bandendekalibrierung geeignet. Eine Feineinstellung und kontinuierliche Anpassung der Leuchtweite 115 kann auf der Straße erfolgen.

Wenn die aktuelle Scheinwerferlichtverteilung bzw. Leuchtweite 115 an das Kamerasystem bzw. das aktive Scheinwerfersystem 340 zurückgeführt wird, können auch AHC-Systeme (AHC = Adaptive Headlight Control) und andere Systeme, die die Lichtverteilung bzw. Leuchtweite 115 ändern, kalibriert werden. Für Abblendlicht beispielsweise gibt es rechtliche Linien, wie es aussehen muss; daher ist die Lichtverteilung allgemein bekannt und nutzbar. Zusätzlich zu der Sichtbarkeit der Reflektoreelemente 235 kann die Sichtweite einer Spurerkennung des Fahrzeugs 100 oder andere Messalgorithmen der Fahrzeugkamera 220 mit einfließen, da die Erkennungsleistung von kamerabasierten Systemen bei Nacht, genau wie die des Fahrers, direkt mit der Scheinwerferausleuchtung zusammenhängt.

Da Kamerasysteme in Fahrzeugen immer größere Verbreitung finden, kann eine solche Kamera genutzt werden, um die Leuchtweite der Scheinwerfer zu bestimmen. Aus der Leuchtweite, die über die Scheinwerferanbauhöhe mit der Kalibrierung zusammenhängt, kann ein de-kalibriertes System erkannt und ein entsprechendes Kalibrierungssignal ausgeben. Das Kalibrierungssignal kann z. B. dem Fahrer als Information angezeigt werden oder an die Scheinwerfer ausgegeben werden, so dass dieselben automatisch eingestellt werden können. Es kann somit eine Sichtweite bzw. Leuchtweite über Fahrbahnmarkierungsmerkmale, wie beispielsweise Begrenzungslinien, Leitpfosten bzw. deren Reflektoren oder dergleichen, bestimmt werden. Eine Scheinwerferkalibrierung kann somit basierend auf einer Sichtweitenbestimmung bzw. Leuchtweitenbestimmung an Fahrbahnmarkierungsmerkmalen erfolgen.

Gemäß einem Ausführungsbeispiel können in einem Schritt des Auswertens Fahrzeugdaten in Kombination mit Beleuchtungsdaten ausgewertet werden. Wenn ein Fahrzeug nickt bzw. über eine Bodenwelle fährt, kann dies in der Kamera oder in von der Kamera erzeugten Bildern gesehen und gesondert ausgewertet werden. Es kann dabei ein "Aufblitzen" der Reflektoren erkannt werden. Werden gleichzeitig zur Ermittlung der Fahrzeugdaten die Reflexion der Reflektoren angesehen, so kann über die Unterschiede der Reflexionen der Nickwinkel herausgefunden werden, bei dem der Reflektor gerade nicht mehr beleuchtet wird. Daraus kann wiederum das Korrektursignal ausgerechnet werden.

Fig. 4 zeigt ein Ablaufdiagramm eines Verfahrens 400 zur Bestimmung einer Leuchtweite zumindest eines Scheinwerfers eines Fahrzeugs, gemäß einem Ausführungsbeispiel der vorliegenden Erfindung. Das Verfahren 400 weist einen Schritt des Erkennens 410 zumindest eines Fahrbahnmarkierungsmerkmals auf, das von dem zumindest einen Scheinwerfer angestrahlt wird. Das Verfahren 400 weist ferner einen Schritt des Ermittelns 420 eines Abstandes zwischen dem Fahrzeug und dem zumindest einen angestrahlten Fahrbahnmarkierungsmerkmal auf. Das Verfahren 400 weist zudem einen Schritt des Bestimmens 430 der Leuchtweite des zumindest einen Scheinwerfers unter Verwendung des ermittelten Abstandes auf. Das Verfahren 400 kann in Verbindung mit einem Fahrzeug aus einer der Figuren 1 bis 3 ausgeführt bzw. umgesetzt werden. Das Verfahren 400 kann in Verbindung mit der Leuchtweitenmesseinrichtung des Fahrzeugs aus Fig. 3 ausgeführt bzw. umgesetzt werden. Insbesondere können die Schritte des Verfahrens von geeigneten Einrichtungen einer Vorrichtung zur Bestimmung einer Leuchtweite zumindest eines Scheinwerfers eines Fahrzeugs umgesetzt werden.

Fig. 5 zeigt ein Ablaufdiagramm eines Verfahrens 500 zur Kalibrierung einer Lichtaussendung zumindest eines Scheinwerfers eines Fahrzeugs, gemäß einem Ausführungsbeispiel der vorliegenden Erfindung. Das Verfahren 500 weist einen Schritt des Bestimmens 510 einer Leuchtweite des zumindest einen Scheinwerfers auf. Dabei kann der Schritt des Bestimmens 510 Teilschritt aufweisen, die den Schritten des Verfahrens zur Bestimmung einer Leuchtweite zumindest eines Scheinwerfers eines Fahrzeugs aus Fig. 4 entsprechen. Das Verfahren 500 weist zudem einen Schritt des Kombinierens 520 der bestimmten Leuchtweite und einer vorgegebenen Leuchtweite auf, um einen Kalibrierungswert zu erzeugen. Alternativ oder zusätzlich kann in dem Schritt des Bestimmens 510 ein geschätzter Nickwinkel des Fahrzeugs bestimmt werden. In diesem Fall kann im Schritt des Kombinierens 520 zusätzlich oder alternativ der geschätzte Nickwinkel mit einem gemessenen Nickwinkel und zusätzlich oder alternativ mit einer gemessenen oder berechneten Nickrate kombiniert werden, um den Kalibrierungswert zu erzeugen. Das Verfahren 500 weist ferner einen Schritt des Ausgebens 530 eines den Kalibrierungswert repräsentierenden Kalibrierungssignals auf, um die Kalibrierung der Lichtaussendung des zumindest einen Scheinwerfers zu bewirken. Dabei kann im Schritt des Ausgebens 530 das Kalibrierungssignal direkt an den zumindest einen Scheinwerfer oder eine Einrichtung zur Ansteuerung des Scheinwerfers als ein Ansteuersignal ausgegeben werden. Alternativ oder zusätzlich kann im Schritt des Ausgebens 530 das Kalibrierungssignal an einen Fahrer des Fahrzeugs als ein Warnsignal ausgegeben werden. Das Verfahren 500 kann in Verbindung mit einem Fahrzeug aus einer der Figuren 1 bis 3 ausgeführt bzw. umgesetzt werden. Das Verfahren 500 kann in Verbindung mit der Scheinwerferansteuereinrichtung und/oder der Scheinwerferkalibriereinrichtung des Fahrzeugs aus Fig. 3 ausgeführt bzw. umgesetzt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren (400) zur Bestimmung einer Leuchtweite (115) zumindest eines Scheinwerfers (110) eines Fahrzeugs (100), wobei das Verfahren (400) folgende Schritte aufweist:
Erkennen (410) zumindest eines Fahrbahnmarkierungsmerkmals (230), das von dem zumindest einen Scheinwerfer (110) angestrahlt wird;
Ermitteln (420) eines Abstandes zwischen dem Fahrzeug (100) und dem zumindest einen angestrahlten Fahrbahnmarkierungsmerkmal (230); und
Bestimmen (430) der Leuchtweite (115) des zumindest einen Scheinwerfers (110) unter Verwendung des ermittelten Abstandes.

2. Verfahren (400) gemäß Anspruch 1, bei dem im Schritt des Erkennens (410) ein Leitpfosten (230) und/oder eine Begrenzungslinie als das zumindest eine Fahrbahnmarkierungsmerkmal (230) erkannt werden.

3. Verfahren (400) gemäß einem der vorangegangenen Ansprüche, bei dem im Schritt des Erkennens (410) eine Reflexion von durch den zumindest einen Scheinwerfer (110) ausgesendetem Licht an einem Reflektorelement (235) des zumindest einen Fahrbahnmarkierungsmerkmals (230) erkannt wird.

4. Verfahren (400) gemäß Anspruch 3, das einen Schritt des Durchführens einer Schwellwertentscheidung aufweist, um zu prüfen, ob ein Helligkeitswert der Reflexion über oder unter einem vorgebbaren Helligkeitsschwellenwert liegt, und bei dem im Schritt des Ermittelns (420) der Abstand abhängig von der Schwellwertentscheidung ermittelt wird.

5. Verfahren (400) gemäß einem der vorangegangenen Ansprüche, bei dem im Schritt des Erkennens (410) das zumindest eine Fahrbahnmarkierungsmerkmal (230) unter Verwendung eines mittels einer Fahrzeugkamera (220) aufgenommenen Bildes erkannt wird.

6. Verfahren (400) gemäß einem der vorangegangenen Ansprüche, bei dem im Schritt des Ermittelns (420) der Abstand basierend auf Informationen einer Abstandssensorik, Objektverfolgung, Bildauswertung und/oder Fahrtdaten ermittelt wird.

7. Verfahren (400) gemäß einem der vorangegangenen Ansprüche, bei dem im Schritt des Erkennens (410) zumindest ein weiteres Fahrbahnmarkierungsmerkmal (230) erkannt wird, das von dem zumindest einen Scheinwerfer (110) angestrahlt wird, im Schritt des Ermittelns (420) zumindest ein weiterer Abstand zwischen dem Fahrzeug (100) und dem zumindest einen weiteren angestrahlten Fahrbahnmarkierungsmerkmal (230) ermittelt wird, und im Schritt des Bestimmens (430) die Leuchtweite (115) des zumindest einen Scheinwerfers (110) unter Verwendung des größeren der ermittelten Abstände bestimmt wird.

8. Verfahren (500) zur Kalibrierung einer Lichtaussendung zumindest eines Scheinwerfers (110) eines Fahrzeugs (100), wobei das Verfahren (500) folgende Schritte aufweist:
Bestimmen (510) einer Leuchtweite (115) des zumindest einen Scheinwerfers (110) nach dem Verfahren (400) gemäß einem der Ansprüche 1 bis 7;
Kombinieren (520) der bestimmten Leuchtweite (115) und einer vorgegebenen Leuchtweite, um einen Kalibrierungswert zu erzeugen; und
Ausgeben (530) eines den Kalibrierungswert repräsentierenden Kalibrierungssignals, um die Kalibrierung der Lichtaussendung des zumindest einen Scheinwerfers (110) zu bewirken.

9. Verfahren (400) gemäß Anspruch 8, mit einem Schritt des Bestimmens eines Helligkeitsverlaufs des zumindest einen Fahrbahnmarkierungsmerkmals (230), um einen geschätzten Nickwinkel des Fahrzeugs (100) zu bestimmen, und bei dem im Schritt des Kombinierens (520) der geschätzte Nickwinkel mit einem gemessenen Nickwinkel und/oder einer Nickrate kombiniert wird, um den Kalibrierungswert zu erzeugen.

10. Vorrichtung, die ausgebildet ist, um die Schritte eines Verfahrens (400; 500) gemäß einem der Ansprüche 1 bis 9 durchzuführen.

11. Computer-Programmprodukt mit Programmcode zur Durchführung eines Verfahrens (400; 500) nach einem der Ansprüche 1 bis 9, wenn das Programm auf einer Vorrichtung ausgeführt wird.
